# EUROPEAN PATENT SPECIFICATION

(11) **EP 2 821 663 B1**
(45) Date of publication and mention of the grant of the patent: **06.12.2017**
(21) Application number: 13188190.6
(22) Date of filing: 10.10.2013
(51) Int. Cl.: F16D 65/12, F16D 65/02

(54) **Brake disk**
Bremsscheibe
Disque de frein

(30) Priority: 05.07.2013 TW 102124208
(43) Date of publication of application: 07.01.2015
(73) Proprietor: Yuan-Hung, Wen, Chang Hua County (TW)
(72) Inventor: Yuan-Hung, Wen, Chang Hua County (TW)
(74) Representative: Lang, Christian

(56) References cited:
- JP-U- S5 199 279
- US-A1- 2012 000 736
- US-A1- 2013 133 993
- US-A1- 2013 168 193

## Description

### BACKGROUND OF THE INVENTION

### Field of the Invention

The present invention relates to a disk, and more particularly to a brake disk for a bike.

### Description of the Prior Art

There are various brake modes on generally bikes. A brake disk structure is widely used nowadays. The brake disk structure provides a brake pad to rub a brake disk for stopping a rotation of a bike wheel, so as to provide a brake motion. Thus, a high friction temperature is avoidless, and the high friction temperature would decrease a friction force between the brake disk and the brake pad; therefore, brake ability would be decreased, and a fail-safe brake would be resulted. Therefore, a heat dissipation motion is the most important issue on the brake disk structure.

A conventional brake disk comprises a bike brake plate having plural heat dissipation holes, vent holes, and assisting heat dissipation holes for the bike brake plate to provide a heat dissipation motion.

However, the conventional brake disk could increase a venting motion for dissipating heat, but said holes would reduce a structural strength of the conventional brake disk. When the conventional brake disk is clamped by a brake block, a high friction heat would be produced, so that the conventional brake disk would be deformed or broken as an unrecoverable problem. Therefore, a fail-safe brake problem would be got more serious, and a traffic accident would be easy resulted to a bike rider. Thus, the conventional brake disk is needed to be improved.

JP S51 99279 U discloses a brake disk comprising a basic body of annular shape, wherein in the radially inner portion, fixing means are provided for assembling the brake disk to a bike hub. Radially more outward, a compact, massive block of material is provided to which on both sides, a heat dissipation member is fixed.

US 2013/133993 A1 discloses a bicycle disk brake rotor having an outer ring for receiving a brake force and an inner ring for being attached to a bike hub, wherein the two rings are connected via bridging slabs, where heat dissipation members are attached.

US 2012/0000736 A1 relates to a brake rotor assembly. In one embodiment, a body has an inner and an outer ring which is connected via bridging elements, and to which on one side a heat dissipation ring is attached.

From US 2013/0168193 A1, the conception is known to provide a bicycle disk brake rotor by connecting two pieces to each other, an inner piece for connecting with a bike hub, and the inner piece connected to an outer ring for braking at radially inward protrusions of the outer ring.

The present invention is, therefore, arisen to obviate or at least mitigate the above mentioned disadvantages.

### SUMMARY OF THE INVENTION

An object of the present invention is to provide a brake disk for providing a better heat dissipation efficiency and enhancing a structural strength of the brake disk.

To achieve the above and other objects, a brake disk comprises a body and at least two heat dissipation members.

The body has an annular portion defined thereon, and the annular portion of the body defines a central axis. The annular portion has a brake portion which is remote from the central axis for a bike brake device to clamp the brake portion. The body has at least one assembling portion extended toward the central axis for connecting with a bike hub. At least one connecting portion is formed between the assembling portion and the brake portion. The connecting portion has at least one first fixing portion formed thereon.

The two heat dissipation members are respectively located on two corresponding lateral sides of the central axis of the body. Each heat dissipation member has at least one second fixing portion, the second fixing portion is fixedly assembled to the first fixing portion.

Thus, the two heat dissipation members could transmit a friction heat from a brake motion of the body to the heat dissipation members so as to provide great heat dissipation efficiency. Besides, the two heat dissipation members are respectively assembled at two corresponding lateral sides of the body so as to increase a structural strength of the body. Therefore, although a high friction heat of the body is produced, the body would not be deformed or broken easily.

The annular portion near the axis of the body has a plurality of heat dissipation portions radially protruding extended toward the central axis. An end of each heat dissipation portion near the central axis is a free end. The free end of each heat dissipation portion does not reach the assembling portion. The heat dissipation portions are defined around the central axis, and they are intervally arranged. Each heat dissipation member is connected with the heat dissipation portions, and the heat dissipation member partially overlaps each heat dissipation portion.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

Fig. 1 is a perspective view of a first embodiment of the present invention;
Fig. 2 is an exploded view of the first embodiment of the present invention;
Fig. 3 is a side cross-sectional view of the first embodiment of the present invention;
Fig. 3A is a partial enlarged view of the first embodiment of the present invention for showing a fastener is fixedly connected to a body and two heat dissipation members;
Fig. 4 is a perspective view of a second embodiment of the present invention for showing that plural convex ribs are intervally arranged on another heat dissipation member;
Fig. 5 is an exploded view of the second embodiment of the present invention for showing plural convex portions are intervally arranged on another body; and
Fig. 6 is an exploded view of a third embodiment of the present invention for showing plural convex ribs are formed as arc-shaped.

### DETAILED DESCRIPTION OF THE PREFERRED EMBODIMENTS

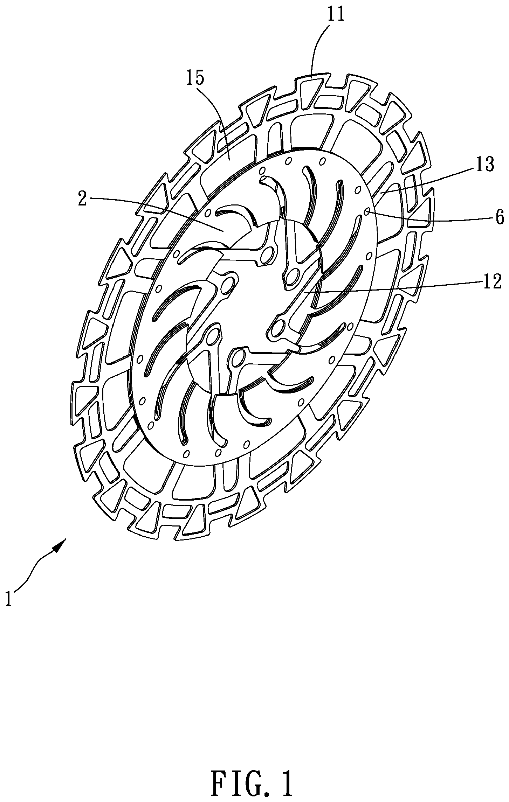

Figs. 1-3 show a brake disk of a first embodiment of the present invention. The brake disk comprises a body 1 and at least two heat dissipation members 2.

The body 1 is a plate and has an annular portion defined thereon. The annular portion of the body 1 defines a central axis. The annular portion has a brake portion 11 which is remote from the central axis. The brake portion 11 is configured to be clamped by a bike brake device of a bicycle. Preferably, a plurality of heat dissipation holes 111 is disposed through the brake portion 11 of the body 1. The dissipation holes 111 are opened along a direction which is parallel to the central axis. The heat dissipation holes 111 are defined around the central axis so as to increase a surface area, which contacts ambient air, of the brake portion 11. When the brake portion 11 of the body 1 is clamped by the bike brake device, the heat dissipation holes 111 of the brake portion 11 could quickly transmit a brake heat of the brake portion 11 away from the body 1. Comparing an iron material with other metallic materials, the iron material is much cheaper than the other metallic materials and has greater structural strength, so that the body 1 is made of the iron material. Therefore, a production cost of the body 1 could be decreased, and the brake heat of the brake portion 11 which is clamped by the bike brake device would not make the body 1 be deformed.

The body 1 has at least one assembling portion 12 extended toward the central axis for connecting with a bike hub. At least one connecting portion 13 is formed between the assembling portion 12 and the brake portion 11. In the first embodiment of the present invention, the body 1 has plural assembling portions 12 formed thereon, and the connecting portion 13 is formed between each assembling portion 12 and the brake portion 11. Clearly, each assembling portion 12 is formed as substantially V-shaped or Y-shaped, and has two arms. A connecting position of the two arms is connected with the connecting portion 13. The brake portion 11, the connecting portions 13 and the assembling portions 12 are formed as one piece. The annular portion of the body 1 has the connecting portions 13 extended toward the central axis, and each connecting portion 13 has the two arms further extended toward the central axis. Each arm of one assembling portion 12 is connected with the adjacent arm of each adjacent assembling portion 12 being adjacent to one assembling portion 12, so that the assembling portions 12 substantially perform a radial structure, and the assembling portions 12 enclosingly define a substantially star-shaped hole. An assembling hole 121 is formed on a connecting position between two connected arms of every two adjacent assembling portions 12. Thus, the assembling hole 121 is provided for securing the bike hub. The connecting portion 13 has at least one first fixing portion formed thereon. Clearly, the first fixing portion includes a first through hole 131. The first through hole 131 is opened at an inner end, which is close to the central axis, of the connecting portion 13. The first through hole 131 is opened along a direction which is parallel to the central axis. Certainly, in other embodiment of the present invention, the assembling portions 12 could be detachable from the corresponding connecting portion 13.

The two heat dissipation members 2 are respectively located at two corresponding lateral sides of the central axis of the body 1. Clearly, the body 1 has two opposite faces, and the two heat dissipation members 2 are respectively located at two opposite faces so as to increase a heat dissipation velocity and enhance a structural strength of the body 1. Besides, gravity center of a bike would be intermediately defined rather than be inclined. Comparing an aluminum material with the iron material, a transmit efficiency of the aluminum material is much better than that of the iron material, so that the two heat dissipation members 2 are preferably made of the aluminum material or an aluminum alloy material, so as to further increase a heat transmit velocity and a heat transmit efficiency. The two heat dissipation members 2 have the same mode to be assembled to the body 1, so that only one heat dissipation member 2 is further described. In the first embodiment, the heat dissipation member 2 is formed as substantially annular-shaped and is coaxial to the body 1. A circular hole 21 is formed at the center of the heat dissipation member 2. Each heat dissipation member 2 has plural elongated holes 22 which are defined around the central axis. Each elongated hole 22 communicates with the circular hole 21, and the elongated holes 22 are intervally and radially arranged. An outer diameter of the heat dissipation member 2 is smaller than an outer diameter of the body 1, and the heat dissipation member 2 is essentially located between the brake portion 11 and the assembling portions 12. Thus, when the body 1 is clamped by the bike brake device, the bike brake device would not abut against the heat dissipation members 2, so that the heat dissipation members 2 would not be rubbed and broken easily. A brake heat of the brake portion 11 could be transmitted to the two heat dissipation members 2 via the connecting portion 13. The heat dissipation member 2 has at least one second fixing portion. The second fixing portion of the heat dissipation member 2 is fixedly assembled to the first fixing portion of the connecting portion 13. Preferably, the heat dissipation member 2 has plural second fixing portions. A number of the second fixing portions corresponds to a number of the first fixing portions of the connecting portion 13 of the body 1. A position of each second fixing portion corresponds to a position of each corresponding first fixing portion. Clearly, each second fixing portion comprises a second through hole 23. The second through holes 23 are defined around the central axis, and the second through holes 23 are intervally arranged. Each second through hole 23 corresponds to each corresponding first through hole 131 of the first fixing portions. Preferably, the annular portion near the axis of the body 1 has plural heat dissipation portions 14 radially protrudingly extended toward the central axis. The heat dissipation portions 14 are defined around the central axis, and the heat dissipation portions 14 are intervally arranged. Each heat dissipation portions 14 is essentially formed as a rectangular plate. Preferably, a tangent to a connecting position of the dissipation portions 14 and the annular portion of the body 1 is substantially vertical to a linear extending direction of the heat dissipation portions 14. Each heat dissipation member 2 is connected with the connecting portions 13, and is further connected with the heat dissipation portions 14. The heat dissipation member 2 partially overlaps each heat dissipation portion 14. Thus, when the brake portion 11 is clamped by the bike brake device and a brake heat is produced, each heat dissipation portions 14 could transmit said brake heat to the heat dissipation member 2 for increasing heat dissipation efficiency.

It is worthily to mention that the assembling portions 12 enclosingly define the substantially star-shaped hole of the body 1, so that each of plural hollow portions 15 is formed between the annular portion of the body 1 and the assembling portions 12. When the two heat dissipation members 2 are assembled at two corresponding lateral sides of the body 1, the assembling portions 12 are sandwiched in between the two heat dissipation members 2, and a vent gap is formed between the two heat dissipation members 2 at the hollow portions 15 so as to further increase a surface area, which contacts ambient air, of each heat dissipation member 2. Thus, when a bike is driven to rotate the body 1, the air could flow from the vent gap between the two heat dissipation members 2 to the central axis so as to increase vent efficiency, and the heat dissipation efficiency is further enhanced.

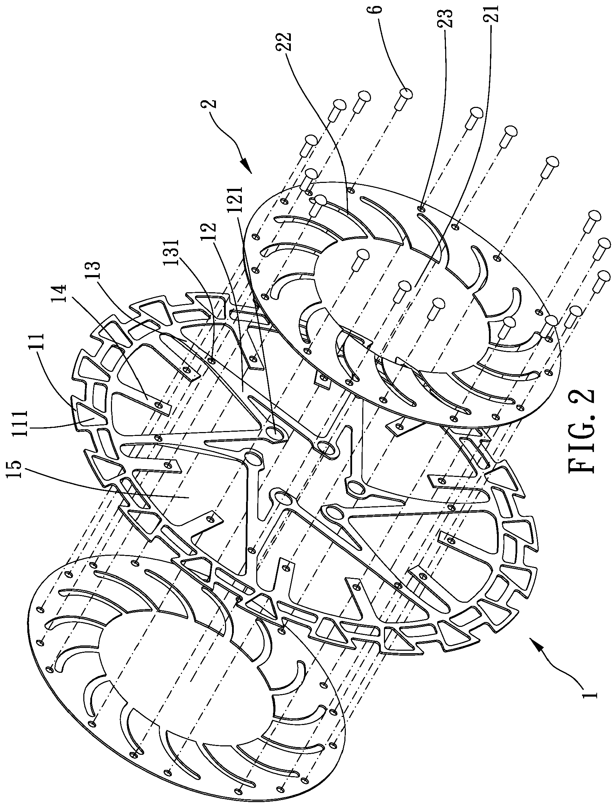

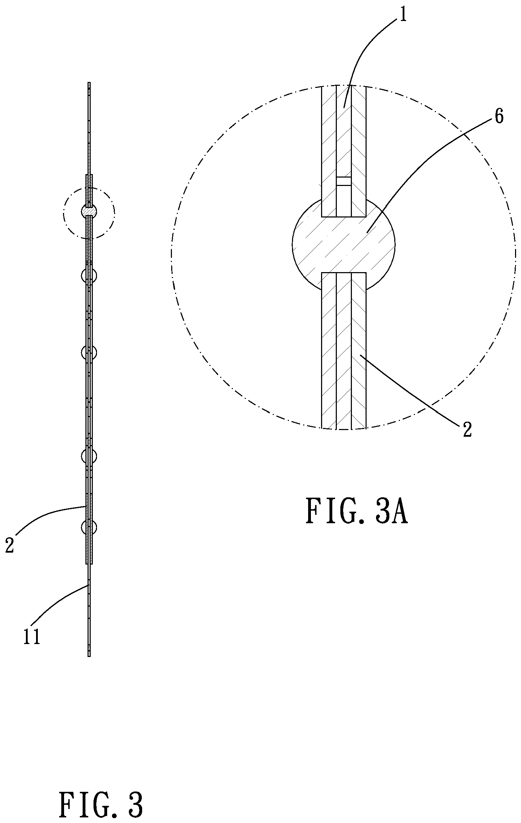

In the first embodiment, referring to Figs. 2 and 3A, the two heat dissipation members 2 is fixedly connected to the body 1 via a fastener 6. Clearly, the fastener 6 is a rivet and has a head portion and a body portion, and a diameter of the head portion is larger than a diameter of the body portion. The body portion of the fastener 6 sequentially passes through the second through hole 23 of one heat dissipation member 2, the first through hole 131 of the connecting portion 13, and second through hole 23 of another heat dissipation member 2. The two heat dissipation members 2 and the body 1 are fixedly connected to each other by striking the body portion. Certainly, in other embodiment, the two heat dissipation members 2 and the body 1 could be fixedly connected to each other by a screw means. Besides, the heat dissipation portions 14 of the body 1 and the heat dissipation portions 14 are riveted together. Thus, the heat dissipation portions 14 could overlap and abut against the heat dissipation members 2. When the brake portion 11 is clamped by the bike brake device, said brake heat could be transmitted through the heat dissipation portions 14 to the two heat dissipation members 2 so as to provide a better heat dissipation efficiency.

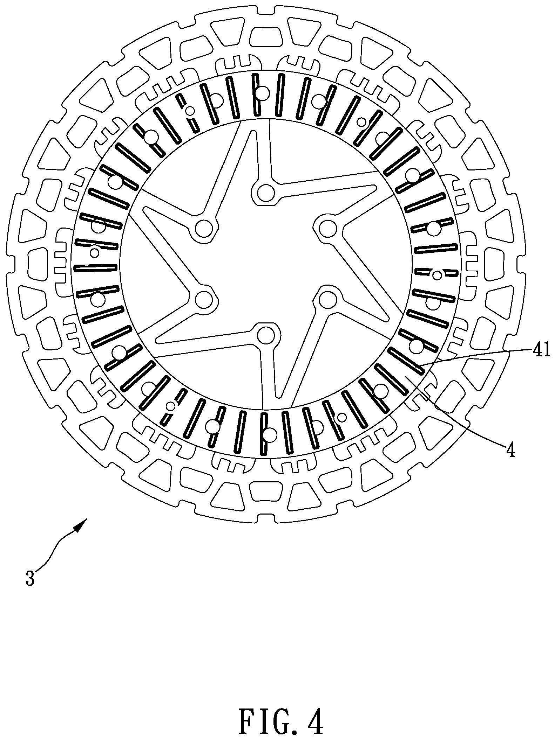

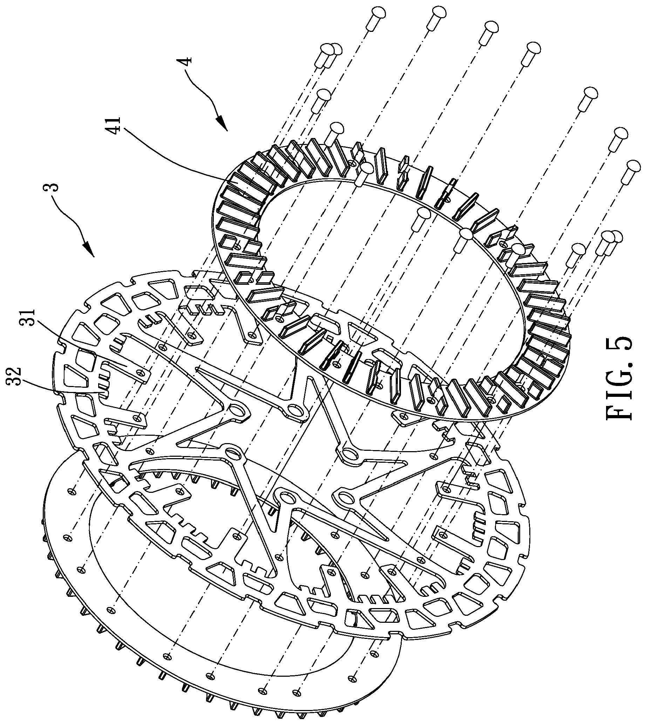

In a second embodiment, referring to Figs. 4-5, a difference between the second embodiment and the first embodiment is that the body 3 has at least one convex portion 32 formed between two adjacent heat dissipation portions 31, and the convex portion 32 is radially extended toward the central axis for increasing a surface area, which contacts ambient air, of the body 3. Besides, the heat dissipation member 4 does not have the elongated hole in the second embodiment. The heat dissipation member 4 has plural convex ribs 41 formed at a side thereof which is opposite to the body 3, for increasing a surface area, which contacts ambient air, of the heat dissipation member 4, so that a heat dissipation efficiency is further improved. The convex ribs 41 are defined around the central axis. Each convex rib 41 protrudes in the direction parallel to the central axis.

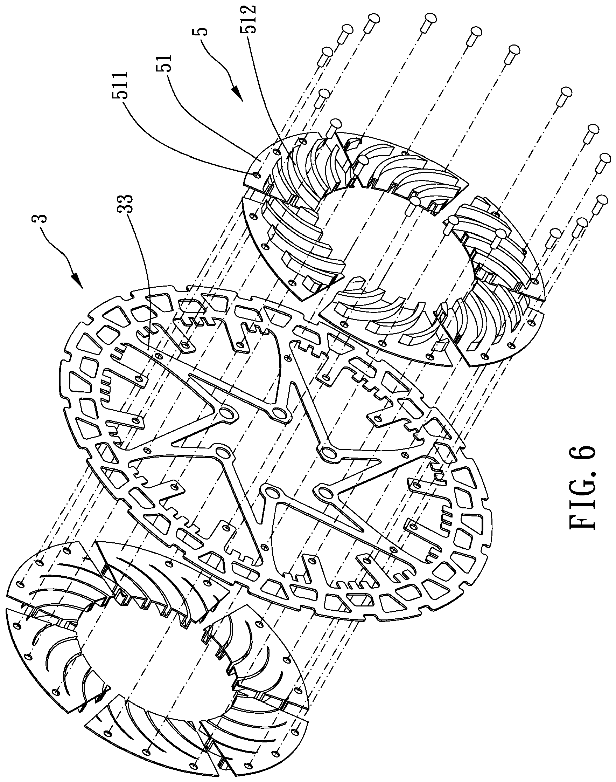

In a third embodiment, referring to Fig. 6, a difference between the third embodiment and said embodiments is that each heat dissipation member 5 includes plural heat dissipation blocks 51. The heat dissipation blocks 51 are arranged on the body 3 in sequence and are defined around the central axis. Each heat dissipation block 51 has at least one second fixing portion formed thereon. Each second fixing portion comprises a second through hole 511. The second fixing portion of each heat dissipation block 51 is assembled to the first fixing portion of the connecting position 33 of the body 3 so as to fixedly connect the heat dissipation block 51 to the body 3. The heat dissipation block 51 and the body 3 are riveted together as said rivet bonding mode of the first embodiment. Each heat dissipation block 51 has plural convex ribs 512 formed at a side thereof which is opposite to the body 3, for increasing a surface area, which contacts ambient air, of the heat dissipation block 51. Each convex rib 512 protrudes in the direction parallel to the central axis.

When the brake disk is driven (take the body 1 of the first embodiment as a specification), the assembling portion 12 could be assembled to the bike hub (not shown) to make the body 1 connect with a bike wheel, so that the body 1 could be driven by the bike wheel. A user could control and drive the bike brake device to clamp the brake portion 11 of the body 1 for braking the bike. The brake portion 11 of the body 1 is clamped by the bike brake device when the body 1 is rotated, so that a high brake heat would be produced. The two heat dissipation members 2 are respectively located at two corresponding lateral sides of the body 1. The fastener 6 is fixedly connected to the two heat dissipation members 2 and the body 1. Each heat dissipation member 2 is located between the brake portion 11 and the assembling portions 12 so as to reduce a heat transmit path. Therefore, the brake heat which is produced by said clamp could be quickly transmitted through the connecting portion 13 of the body 1 to the two heat dissipation members 2. Besides, each heat dissipation member 2 has plural elongated holes 22. Each elongated hole 22 communicates with the circular hole 21 of the heat dissipation member 2 so as to increase a surface area, which contacts ambient air, of the heat dissipation member 2, and the heat dissipation efficiency is further improved. Thus, said high brake heat of the body 1 could be diffused, and the body 1 would not be deformed or broken easily so as to avoid a fail-safe brake problem. Moreover, when the body 1 is clamped by the bike brake device, the heat dissipation portion 14 would be clamped by the bike brake device also. The heat dissipation portions 14 could abut against the heat dissipation members 2, and an area of the heat dissipation member 2 partially overlaps the heat dissipation portions 14, so that said brake heat could be transmitted through the connecting portion 13 to the two heat dissipation members 2, and a heat transmitting velocity and a heat dissipation efficiency would be better. Said brake heat would not be transmitted through the assembling portions 12 to the bike hub, so that a temperature of the bike hub would not be increased. Besides, an outer diameter of the heat dissipation member 2 is smaller than an outer diameter of the body 1. When the body 1 is clamped by the bike brake device, the bike brake device would not abut against the heat dissipation members 2, so that the heat dissipation members 2 would not be rubbed and broken easily.

Under above arrangement, the brake disk of the present invention is simplifying and practical. Said heat transmitting path could be reduced by the heat dissipation members 2, and said brake head could be transmitted through the connecting portion 13 to the two heat dissipation members 2 so as to increase a heat dissipation velocity and enhance a structural strength of the body 1.

Although particular embodiments of the invention have been described in detail for purposes of illustration, various modifications and enhancements may be made without departing from the spirit and scope of the invention. Accordingly, the invention is not to be limited except as by the appended claims.

## Claims

1. A brake disk comprising:
a body (1) having an annular portion defined thereon, the annular portion of the body defining a central axis, the annular portion having a brake portion (11) which is remote from the central axis for a bike brake device to clamp the brake portion (11), the body (1) having at least one assembling portion (12) extended toward the central axis for connecting with a bike hub, at least one connecting portion (13) formed between the assembling portion (12) and the brake portion (11), the connecting portion (13) having at least one first fixing portion formed thereon; and
at least two heat dissipation members (2) respectively assembled at two corresponding lateral sides of the connecting portion (13), each heat dissipation member (2) having at least one second fixing portion, the second fixing portion fixedly assembled to the first fixing portion,
**characterized in that** the annular portion near the axis of the body (1) has a plurality of heat dissipation portions (14) radially protrudingly extended toward the central axis, an end of each heat dissipation portion (14) near the central axis being a free end, the free end of each heat dissipation portion (14) not reaching the assembling portion (12); the heat dissipation portions (14) are defined around the central axis, and the heat dissipation portions (14) are intervally arranged; each heat dissipation member (2) is connected with the heat dissipation portions (14), and the heat dissipation member (2) partially overlaps each heat dissipation portion (14).

2. The brake disk as claimed in claim 1, wherein each heat dissipation member (2) is formed as substantially annular-shaped and is coaxial to the body (1); each heat dissipation member (2) is made of an aluminum alloy; a circular hole (21) is formed at the center of the heat dissipation member (2); each heat dissipation member (2) has a plurality of elongated holes (22) defined around the central axis; each elongated hole communicates with the circular hole (21).

3. The brake disk as claimed in claim 1, wherein the body (3) has at least one convex portion (32) formed between each two adjacent heat dissipation portions (31), and the convex portion (32) is radially extended toward the central axis for increasing a surface area, which contacts ambient air, of the body (3).

4. The brake disk as claimed in claim 1, wherein plural heat dissipation holes (111) are disposed through the brake portion (11) along a direction which is parallel to the central axis; the heat dissipation holes (111) are defined around the central axis.

5. The brake disk as claimed in claim 1, wherein the body (1) has plural assembling portions (12) formed thereon; each assembling portion (12) is formed as substantially V-shaped or Y-shaped and has two arms; a connecting position of the two arms is connected with the connecting portion (13) ; each arm of one assembling portion (12) is connected with the adjacent arm of each adjacent assembling portion (12), so that the assembling portions (12) perform as substantially a radial structure; an assembling hole (121) is formed on a connecting position between two connected arms of every two adjacent assembling portions (12).

6. The brake disk as claimed in claim 1, wherein each heat dissipation member (2) is formed as substantially annular-shaped and is coaxial to the body (1); each heat dissipation member (2) has plural convex ribs (41) formed at a side thereof which is opposite to the body (1), for increasing a surface area, which contacts ambient air, of the heat dissipation member (2); the convex ribs (41) are defined around the central axis; each convex rib (41) protrudes in a direction parallel to the central axis.

7. The brake disk as claimed in claim 1, wherein each heat dissipation member (5) includes plural heat dissipation blocks (51); the heat dissipation blocks (51) are arranged on the body (3) in sequence and are defined around the central axis; each heat dissipation block (51) has at least one second fixing portion formed thereon; the second fixing portion of each heat dissipation block (51) is assembled to the first fixing portion of the connecting position of the body so as to fixedly connect the heat dissipation member (5) to the body.

8. The brake disk as claimed in claim 7, wherein each heat dissipation block (51) has plural convex ribs (512) formed at a side thereof which is opposite to the body (3), for increasing a surface area, which contacts ambient air, of the heat dissipation member (5); each convex rib (512) protrudes in a direction parallel to the central axis.

## Patentansprüche

1. Bremsscheibe, umfassend:
einen Körper (1) mit einem daran ausgebildeten ringförmigen Abschnitt, wobei der ringförmige Abschnitt des Körpers eine Mittelachse definiert, wobei der ringförmige Abschnitt einen Bremsenabschnitt (11) hat, der von der Mittelachse entfernt ist, damit eine Fahrradbremsvorrichtung den Bremsenabschnitt (11) festklemmen kann, wobei der Körper (1) wenigstens einen Montageabschnitt (12) hat, der sich zur Verbindung mit einer Fahrradnabe in Richtung der Mittelachse erstreckt, wobei wenigstens ein Verbindungsabschnitt (13) zwischen dem Montageabschnitt (12) und dem Bremsenabschnitt (11) ausgebildet ist, wobei der Verbindungsabschnitt (13) wenigstens einen daran ausgebildeten ersten Befestigungsabschnitt aufweist, und
wenigstens zwei Wärmeableitungselemente (2), welche entsprechend an zwei korrespondierenden lateralen Seiten des Verbindungsabschnitts (13) montiert sind, wobei jedes Wärmeableitungselement (2) wenigstens einen zweiten Befestigungsabschnitt hat, wobei der zweite Befestigungsabschnitt fest an dem ersten Befestigungsabschnitt montiert ist,
**dadurch gekennzeichnet, dass** der ringförmige Abschnitt nahe der Achse des Körpers (1) eine Mehrzahl von Wärmeableitungsabschnitten (14) aufweist, die sich radial hervorstehend in Richtung der Mittelachse erstrecken, wobei ein sich nahe der Mittelachse befindliches Ende von jedem Wärmeableitungsabschnitt (14) ein freies Ende ist, wobei das freie Ende von jedem Wärmeableitungsabschnitt (14) nicht bis zu dem Montageabschnitt (12) reicht, wobei die Wärmeableitungsabschnitte (14) um die Mittelachse herum ausgebildet sind, wobei die Wärmeableitungsabschnitte (14) voneinander beabstandet angeordnet sind, wobei jedes Wärmeableitungselement (2) mit den Wärmeableitungsabschnitten (14) verbunden ist, und wobei das Wärmeableitungselement (2) teilweise mit jedem Wärmeableitungsabschnitt (14) überlappt.

2. Bremsscheibe nach Anspruch 1, bei welcher jedes Wärmeableitungselement (2) im Wesentlichen in einer ringförmigen Gestalt ausgebildet ist und koaxial zu dem Körper (1) ist, wobei jedes Wärmeableitungselement (2) aus einer Aluminiumlegierung gefertigt ist, wobei ein kreisförmiges Loch (21) in der Mitte des Wärmeableitungselements (2) ausgebildet ist, wobei jedes Wärmeableitungselement (2) eine Mehrzahl von Langlöchern (22) aufweist, die um die Mittelachse herum ausgebildet sind, wobei jedes Langloch mit dem kreisförmigen Loch (21) in Verbindung steht.

3. Bremsscheibe nach Anspruch 1, bei welcher der Körper (3) wenigstens einen konvexen Abschnitt (32) hat, der jeweils zwischen zwei benachbarten Wärmeableitungsabschnitten (31) ausgebildet ist, wobei sich der konvexe Abschnitt (32) radial in Richtung der Mittelachse erstreckt, um einen mit der Umgebungsluft in Kontakt stehenden Oberflächenbereich des Körpers (3) zu vergrößern.

4. Bremsscheibe nach Anspruch 1, bei welcher mehrere Wärmeableitungslöcher (111) entlang einer Richtung, die parallel zur Mittelachse ist, durch den Bremsenabschnitt (11) hindurch ausgebildet sind, wobei die Wärmeableitungslöcher (111) um die Mittelachse herum angeordnet sind.

5. Bremsscheibe nach Anspruch 1, bei welcher der Körper (1) mehrere daran ausgebildete Montageabschnitte (12) hat, wobei jeder Montageabschnitt (12) im Wesentlichen V-förmig oder Y - förmig ausgebildet ist und zwei Arme hat, wobei eine Verbindungsposition der zwei Arme mit dem Verbindungsabschnitt (13) verbunden ist, wobei jeder Arm von einem Montageabschnitt (12) mit dem benachbarten Arm des jeweils benachbarten Montageabschnitts (12) verbunden ist, sodass die Montageabschnitte (12) als eine im Wesentlichen radiale Struktur ausgeführt sind, wobei ein Montageloch (121) an einer Verbindungsposition zwischen zwei verbundenen Armen von allen zwei benachbarten Montageabschnitten (12) ausgebildet ist.

6. Bremsscheibe nach Anspruch 1, bei welcher jedes Wärmeableitungselement (2) im Wesentlichen in einer ringförmigen Gestalt ausgebildet ist und koaxial zu dem Körper (1) ist, wobei jedes Wärmeableitungselement (2) mehrere konvexe Rippen (41) hat, die an einer dem Körper (1) gegenüberliegenden Seite desselben ausgebildet sind, um einen mit der Umgebungsluft in Kontakt stehenden Oberflächenbereich des Wärmeableitungselements (2) zu vergrößern, wobei die konvexen Rippen (41) um die Mittelachse herum angeordnet sind, wobei jede konvexe Rippe (41) in einer Richtung parallel zur Mittelachse hervorsteht.

7. Bremsscheibe nach Anspruch 1, bei welcher jedes Wärmeableitungselement (5) mehrere Wärmeableitungsblöcke (51) beinhaltet, wobei die Wärmeableitungsblöcke (51) der Reihe nach an dem Körper (3) angeordnet sind und um die Mittelachse herum vorgesehen sind, wobei jeder Wärmeableitungsblock (51) wenigstens einen daran ausgebildeten zweiten Befestigungsabschnitt aufweist, wobei der zweite Befestigungsabschnitt von jedem Wärmeableitungsblock (51) an dem ersten Befestigungsabschnitt der Verbindungsposition des Körpers montiert ist, um das Wärmeableitungselement (5) fest mit dem Körper zu verbinden.

8. Bremsscheibe nach Anspruch 7, bei welcher jeder Wärmeableitungsblock (51) mehrere konvexe Rippen (512) hat, die an einer dem Körper (3) gegenüberliegenden Seite desselben ausgebildet sind, um einen mit der Umgebungsluft in Kontakt stehenden Oberflächenbereich des Wärmeableitungselements (5) zu vergrößern, wobei jede konvexe Rippe (512) in einer Richtung parallel zur Mittelachse hervorsteht.

## Revendications

1. Disque de frein comprenant:
un corps (1) sur lequel est définie une portion annulaire, la portion annulaire du corps définissant un axe central, la portion annulaire ayant une portion de frein (11) qui est éloignée de l'axe central pour un dispositif de frein de vélo afin de serrer la portion de frein (11), le corps (1) ayant au moins une portion d'assemblage (12) étendue vers l'axe central pour se raccorder à un moyeu de vélo, au moins une portion de raccordement (13) formée entre la portion d'assemblage (12) et la portion de frein (11), la portion de raccordement (13) ayant au moins une première portion de fixation formée dessus; et
au moins deux organes de dissipation de chaleur (2) assemblés respectivement au niveau de deux côtés latéraux correspondants de la portion de raccordement (13), chaque organe de dissipation de chaleur (2) ayant au moins une seconde portion de fixation, la seconde portion de fixation étant assemblée à demeure à la première portion de fixation,
**caractérisé en ce que** la portion annulaire près de l'axe du corps (1) a une pluralité de portions de dissipation de chaleur (14) étendues saillant radialement vers l'axe central, une extrémité de chaque portion de dissipation de chaleur (14) près de l'axe central étant une extrémité libre, l'extrémité libre de chaque portion de dissipation de chaleur (14) n'atteignant pas la portion d'assemblage (12); les portions de dissipation de chaleur (14) sont définies autour de l'axe central, et les portions de dissipation de chaleur (14) sont agencées par intervalle; chaque organe de dissipation de chaleur (2) est raccordé aux portions de dissipation de chaleur (14), et l'organe de dissipation de chaleur (2) chevauche partiellement chaque portion de dissipation de chaleur (14).

2. Disque de frein selon la revendication 1, dans lequel chaque organe de dissipation de chaleur (2) a une forme sensiblement annulaire et est coaxial au corps (1); chaque organe de dissipation de chaleur (2) est réalisé en un alliage d'aluminium; un trou circulaire (21) est formé au centre de l'organe de dissipation de chaleur (2); chaque organe de dissipation de chaleur (2) a une pluralité de trous allongés (22) définie autour de l'axe central; chaque trou allongé communique avec le trou circulaire (21).

3. Disque de frein selon la revendication 1, dans lequel le corps (3) a au moins une portion convexe (32) formée entre chacune des deux portions de dissipation de chaleur (31) adjacentes, et la portion convexe (32) est étendue radialement vers l'axe central pour augmenter une superficie, qui entre en contact avec l'air ambiant, du corps (3).

4. Disque de frein selon la revendication 1, dans lequel plusieurs trous de dissipation de chaleur (111) sont disposés à travers la portion de frein (11) le long d'une direction qui est parallèle à l'axe central; les trous de dissipation de chaleur (111) sont définis autour de l'axe central.

5. Disque de frein selon la revendication 1, dans lequel le corps (1) a plusieurs portions d'assemblage (12) formées sur celui-ci; chaque portion d'assemblage (12) a une forme sensiblement de V ou de Y et comporte deux bras; une position de raccordement des deux bras est raccordée à la portion de raccordement (13); chaque bras d'une portion d'assemblage (12) est raccordé au bras adjacent de chaque portion d'assemblage (12) adjacente, de sorte que les portions d'assemblage (12) fonctionnent sensiblement comme une structure radiale ; un trou d'assemblage (121) est formé sur une position de raccordement entre deux bras raccordés d'une portion d'assemblage (12) adjacente sur deux.

6. Disque de frein selon la revendication 1, dans lequel chaque organe de dissipation de chaleur (2) a une forme sensiblement annulaire et est coaxial au corps (1); chaque organe de dissipation de chaleur (2) comporte plusieurs nervures convexes (41) formées au niveau d'un côté de celui-ci qui est opposé au corps (1), pour augmenter une superficie, en contact avec l'air ambiant, de l'organe de dissipation de chaleur (2); les nervures convexes (41) sont définies autour de l'axe central; chaque nervure convexe (41) fait saillie dans une direction parallèle à l'axe central.

7. Disque de frein selon la revendication 1, dans lequel chaque organe de dissipation de chaleur (5) comporte plusieurs blocs de dissipation de chaleur (51); les blocs de dissipation de chaleur (51) sont agencés sur le corps (3) en séquence et sont définis autour de l'axe central; chaque bloc de dissipation de chaleur (51) a au moins une seconde portion de fixation formée sur celui-ci; la seconde portion de fixation de chaque bloc de dissipation de chaleur (51) est assemblée à la première portion de fixation de la position de raccordement du corps de façon à raccorder à demeure l'organe de dissipation de chaleur (5) au corps.

8. Disque de frein selon la revendication 7, dans lequel chaque bloc de dissipation de chaleur (51) comporte plusieurs nervures convexes (512) formées au niveau d'un côté de celui-ci qui est opposé au corps (3), pour augmenter une superficie, en contact avec l'air ambiant, de l'organe de dissipation de chaleur (5); chaque nervure convexe (512) fait saillie dans une direction parallèle à l'axe central.
